# DEMANDE DE BREVET EUROPEEN

(11) **EP 2 571 336 A1**
(43) Date de publication de la demande: **20.03.2013**
(21) Numéro de dépôt: 12184569.7
(22) Date de dépôt: 14.09.2012
(51) Int. Cl.: H05B 41/285, H05B 41/292, H05B 41/298

(54) **Appareil d'eclairage public**

(30) Priorité: 16.09.2011 FR 1158267
(71) Demandeur: R2R Developpement, 69009 Lyon (FR)
(72) Inventeur: Henry D'Aulnois, Benoit, 69130 Ecully (FR)
(74) Mandataire: Colombo, Michel

(57) **Abrégé**

Cet appareil d'éclairage public comporte un dispositif (42) de protection contre les surtensions comprenant
- une électronique (116) de commande apte :
● à comparer la tension d'alimentation présente sur un réseau électrique à au moins un seuil prédéterminé, et
● à commander automatiquement le déplacement d'un premier interrupteur (97) de sa position fermée vers sa position ouverte en réponse au franchissement par cette tension d'alimentation du seuil prédéterminé,

dans lequel le dispositif de protection comporte un deuxième interrupteur (99) déplaçable, en réponse au déplacement du premier interrupteur de sa position fermée vers sa position ouverte :
- d'une position fermée dans laquelle le deuxième interrupteur (99) raccorde électriquement l'électronique (116) de commande au réseau électrique pour l'alimenter,
- vers une position ouverte dans laquelle le deuxième interrupteur (99) isole électriquement l'électronique de commande du réseau électrique.

## Description

L'invention concerne un appareil d'éclairage public alimenté par un réseau électrique seul ou commun à plusieurs appareils d'éclairage public. L'invention a également pour objet un dispositif de protection contre les surtensions pour cet appareil d'éclairage public ainsi qu'un procédé de fonctionnement de cet appareil d'éclairage public.

Par appareil d'éclairage public, on désigne un appareil, quelqu'en soit sa technologie, qui éclaire un élément situé dans un espace public. Typiquement, l'élément éclairé est choisi dans le groupe composé de : mobiliers urbains, voiries publiques, parcs et jardins publics, parkings publics, monuments publics et signalisation tricolore.

Lorsque l'appareil d'éclairage public éclaire la voirie, il est également connu sous le terme de « candélabre » ou de réverbère ou de lampadaire extérieur ou tout terme appartenant aux appareils d'éclairage public au sens des normes les régissant ou des termes usités.

Des appareils connus d'éclairage public comportent :
- au moins une lampe pour éclairer un élément d'un espace public, et
- un dispositif de protection contre les surintensités.

Plus précisément, pour protéger la lampe, ces appareils connus comportent généralement un dispositif de protection thermique contre les courts-circuits. Il a aussi été proposé de les équiper d'une varistance pour écrêter des pics de tension. Toutefois, malgré toutes ces précautions, il arrive encore fréquemment que les lampes soient mises hors d'usage bien avant leur durée de vie prévisible.

De l'état de la technique est également connu de :
- US6577513B1,
- US2004/080283A1,
- US5907224A,
- FR2668329A1,
- US2005/179402A1,
- US5355055A,
- WO02/065630A1.

L'invention vise à remédier à cet inconvénient en proposant un appareil d'éclairage public conforme à la revendication 1.

Ici, par « interrupteur », on désigne un composant qui a deux positions, à savoir une position ouverte et une position fermée. Dans la position ouverte, le courant ne peut pas traverser l'interrupteur. Dans la position fermée, le courant peut librement traverser l'interrupteur. Avec cette définition, un interrupteur correspond simplement à une paire de contacts électriques d'un relais. Par exemple, si un relais a un premier, un deuxième et un troisième contacts électriques déplaçables, en alternance, entre une première position dans laquelle les premier et deuxième contacts électriques se touchent et une seconde position dans laquelle les deuxième et troisième contacts électriques se touchent, alors celui-ci correspond à deux interrupteurs.

Il a été constaté par le déposant qu'une des causes pour lesquelles les lampes sont détériorées avant la fin de leur durée de vie prévisible est l'existence de surtensions de longue durée sur le réseau électrique. Par longue durée, on désigne une durée supérieure à 0,1 s et, typiquement, supérieure à 0,3 s. Les varistances sont bien adaptées pour éliminer un pic de tension de courte durée c'est-à-dire inférieure à 0,1 s. Par contre, ces varistances ne permettent pas d'éliminer les surtensions de longues durées. Au contraire, les surtensions de longue durée finissent par détruire la varistance qui ne remplit plus alors son rôle protecteur.

L'appareil ci-dessus protège la lampe en l'isolant du réseau en cas de surtension. Pour cela, un interrupteur est utilisé. Un tel dispositif est bien plus robuste que les varistances et protège efficacement la lampe contre les surtensions de longue durée.

L'appareil d'éclairage ci-dessus est donc plus robuste vis-à-vis des mises hors d'usage prématurées des lampes et des composants électriques qu'il comporte.

L'invention a également pour objet un dispositif de protection contre les surtensions pour l'appareil d'éclairage public ci-dessus.

Les modes de réalisation de ce dispositif de protection peuvent comporter une ou plusieurs des caractéristiques des revendications dépendantes.

Ces modes de réalisation du dispositif présentent en outre les avantages suivants :
- utiliser un deuxième interrupteur pour isoler du réseau électrique l'électronique de commande du dispositif permet de protéger cette électronique de commande contre les surtensions ;
- utiliser un troisième interrupteur pour alimenter la borne de commande sans passer par l'électronique de commande permet de maintenir la protection contre les surtensions même si l'électronique de commande n'est plus alimentée ;
- utiliser un diviseur de tension pour alimenter la borne de commande permet de protéger les interrupteurs contre les surtensions ;
- utiliser un premier interrupteur normalement fermé permet de réarmer le dispositif en coupant l'alimentation sur le réseau électrique ;
- utiliser un relais pour réaliser les interrupteurs permet d'avoir une isolation galvanique et une commande simultanée des interrupteurs.

L'invention a également pour objet un procédé de fonctionnement d'un appareil d'éclairage public conforme à la revendication 9.

L'invention sera mieux comprise à la lecture de la description qui va suivre, donnée uniquement à titre d'exemple non limitatif et faite en se référant aux dessins sur lesquels :
- la figure 1 est une illustration schématique d'un système d'éclairage public,
- la figure 2 est une illustration schématique d'un dispositif de protection contre les surtensions utilisé dans le système de la figure 1, et
- la figure 3 est un organigramme d'un procédé de protection contre les surtensions à l'aide du dispositif de la figure 2.

Dans ces figures, les mêmes références sont utilisées pour désigner les mêmes éléments.

Dans la suite de cette description, les caractéristiques et fonctions bien connues de l'homme du métier ne sont pas décrites en détail.

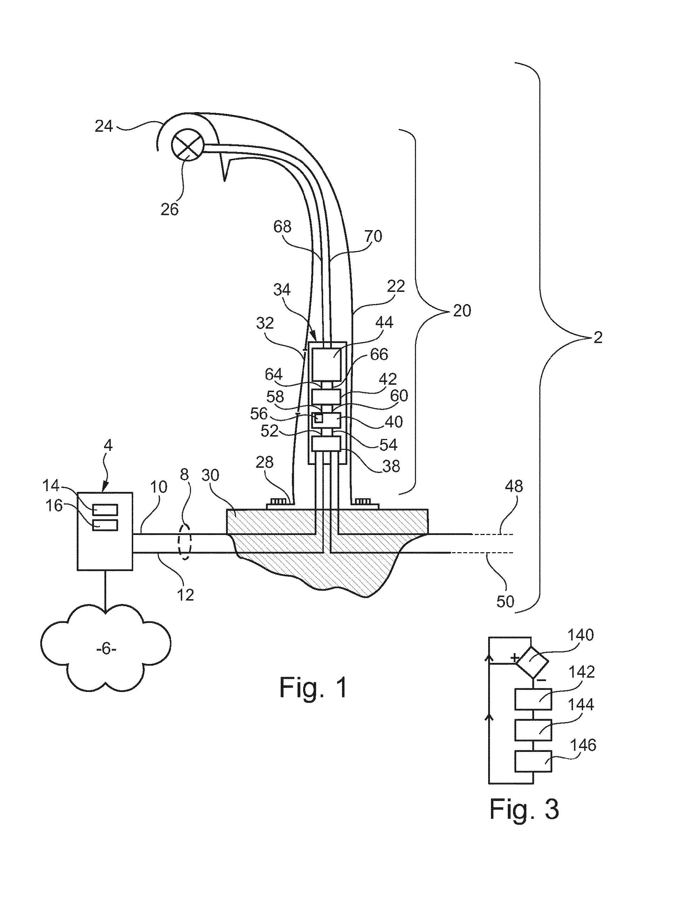

La figure 1 représente un système 2 d'éclairage public. Le système 2 est ici décrit dans le cas particulier où celui-ci est utilisé pour éclairer une voirie publique.

Ce système 2 comporte une armoire 4 d'alimentation de plusieurs appareils d'éclairage public. Ici, les appareils d'éclairage public sont des candélabres. L'armoire 4 est raccordée à une source 6 d'énergie électrique. Typiquement, la source 6 est par exemple un réseau de distribution d'électricité. L'armoire 4 alimente un réseau électrique 8 d'alimentation des différents appareils d'éclairage public à partir de la source 6 d'énergie. Ce réseau 8 est un réseau basse tension alternative, c'est-à-dire un réseau sur lequel la tension alternative est inférieure à 400 V efficace. Ici, la tension nominale sur le réseau 8 est de 230 Vac à une fréquence de 50 Hz.

Le réseau 8 est formé de câbles d'alimentation qui raccordent en série les différents appareils d'éclairage public. Ici, seuls deux câbles 10 et 12 partant de l'armoire 4 sont représentés. Typiquement, le câble 10 correspond à la phase tandis que le câble 12 correspond au neutre.

L'armoire 4 comprend des équipements 14 de protection contre les surintensités. Ces équipements 14 sont aptes à couper automatiquement l'alimentation du réseau 8 en cas de court-circuit. L'armoire 4 comporte d'autres éléments tels que notamment une horloge 16. L'horloge 16 est programmée pour déclencher l'allumage des appareils d'éclairage à heure fixe le soir et éteindre ces mêmes appareils d'éclairage le matin. Pour cela, l'horloge 16 commande la mise sous tension et, en alternance, la coupure de l'alimentation du réseau 8.

Pour simplifier l'illustration, un seul candélabre 20 a été représenté sur la figure 1. De plus, on suppose que tous les autres candélabres du système 2 sont identiques au candélabre 20.

Le candélabre 20 comprend un mat vertical 22 à l'extrémité supérieure duquel est fixée une gamelle 24. La gamelle reçoit une lampe 26. Typiquement, la gamelle comporte également un réflecteur et une vitre de protection de la lampe 26. L'extrémité inférieure du mât 22 comporte un pied 28 qui est fixé sans aucun degré de liberté sur un sol 30 à proximité de la voirie à éclairer.

La lampe 26 est typiquement une lampe à décharge. Une telle lampe nécessite une tension d'amorçage importante lors de son allumage. La tension d'amorçage est supérieure à 1 000 V et, généralement, supérieure à 3 000 ou 4 000 V.

Le mât 22 comprend, par exemple, une trappe 32 de visite. Cette trappe 32 donne accès à un coffret 34 de raccordement situé à l'intérieur du mât 22.

Le coffret 34 comprend les différents équipements électriques nécessaires au fonctionnement et au raccordement du candélabre 20 au réseau 8.

Dans ce cas particulier, le coffret 34 comprend :
- un bornier 38 de raccordement au réseau 8,
- un dispositif 40 de protection thermique,
- un dispositif 42 de protection contre les surtensions, et
- un ballast 44.

Le bornier 38 permet de raccorder en série les câbles entrants 10 et 12, respectivement, à des câbles sortants 48, 50. Les câbles sortants 48, 50 alimentent le candélabre suivant du système 2. Le bornier 38 raccorde également par l'intermédiaire de deux câbles 52, 54 le dispositif 40 au réseau 8.

Le dispositif 40 protège la lampe et les différents dispositifs électriques du candélabre 20 contre les courts-circuits. Ce dispositif 40 est déplaçable entre une position déclenchée et une position armée. Dans la position déclenchée, il isole électriquement la lampe 26, le dispositif 42 et le ballast 44 du réseau 8. Dans la position armée, la lampe 26, le dispositif 42 et le ballast 44 sont raccordés électriquement au réseau 8. Le dispositif 40 bascule de sa position armée vers sa position déclenchée automatiquement en réponse à la détection d'un court-circuit. Ce dispositif 40 peut être un disjoncteur, un disjoncteur différentiel ou un coupe-circuit fusible.

Le dispositif 40 peut être équipé d'une unité 56 de réarmement automatique. Cette unité 56 commande automatiquement le déplacement du dispositif 40 de sa position déclenchée vers sa position armée après, par exemple, une durée prédéterminée δT. Si le court-circuit est toujours présent après la durée δT, alors le dispositif 40 rebascule immédiatement vers sa position déclenchée. Le nombre de tentatives de réarmement automatique est généralement limité à deux ou trois. Ensuite, le dispositif 40 est maintenu dans sa position déclenchée.

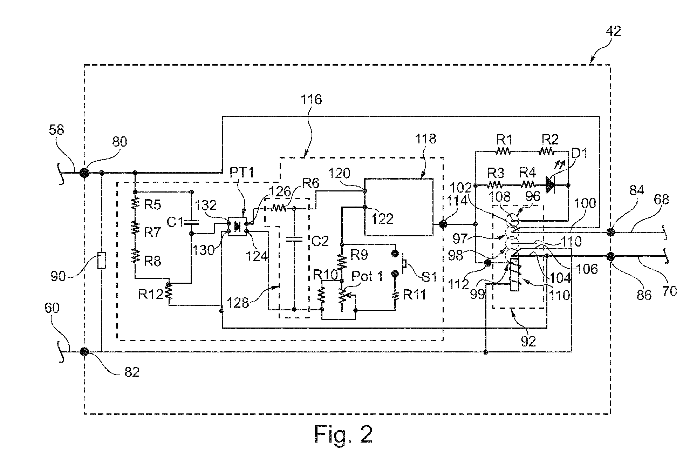

Le dispositif 42 de protection contre les surtensions est raccordé au dispositif 40 par l'intermédiaire de câbles 58 et 60 pour être alimenté par le réseau 8. Le dispositif 42 a ici pour fonction d'isoler électriquement la lampe 26 et le ballast 44 du réseau 8 en cas de surtension de longue durée. Par surtension, on désigne ici une tension supérieure d'au moins 10 % à la tension nominale du réseau 8. Ce dispositif 42 détecte une surtension et, en réponse, se déplace d'un état armé dans lequel la lampe 26 et le ballast 44 sont alimentés par le réseau 8 vers un état déclenché dans lequel la lampe 26 et le ballast 44 sont électriquement isolés du réseau 8. Ce dispositif 42 est décrit plus en détail en référence à la figure 2.

Le ballast 44 est raccordé en sortie du dispositif 42 par l'intermédiaire de deux câbles 64 et 66. Le ballast 44 alimente la lampe 26 par l'intermédiaire de deux câbles 68 et 70. Le ballast a notamment pour fonction de générer la tension d'amorçage nécessaire à l'allumage de la lampe 26. Typiquement, ici, le ballast 44 est un ballast électronique et non pas un ballast électromécanique. Un ballast électromécanique est une simple inductance. Ce ballast 44 peut également remplir d'autres fonctions.

La figure 2 représente plus en détail un exemple de réalisation du dispositif 42. Ce dispositif 42 est équipé de deux bornes d'entrée 80 et 82 raccordées, respectivement, aux câbles 58 et 60. Le dispositif 42 comporte également deux bornes de sortie 84 et 86 raccordées, respectivement, aux câbles 64 et 66.

Une varistance 90 est directement raccordée entre les bornes 80 et 82 pour éliminer les pics de tension supérieurs à 400 V. Par la suite le terme « raccordé » signifie raccordé électriquement.

Le dispositif 42 comprend un relais 92. Ce relais 92 comporte quatre paires de contacts 96 à 99. Chaque paire de contacts forme un interrupteur portant la même référence numérique déplaçable entre une position ouverte et une position fermée. La paire de contacts 97 comprend deux contacts électriques 100 et 102. Le contact 100 est directement raccordé en permanence à la borne de sortie 84. Le contact 102 est directement raccordé en permanence à la borne 80. Au repos, c'est-à-dire en absence de toute alimentation, l'interrupteur 97 est en position fermée.

L'interrupteur 99 est formé par deux contacts 104 et 106 du relais 92. Le contact 104 est raccordé directement et en permanence à la borne 86. Le contact 106 est raccordé directement et en permanence à la borne 82. Au repos, l'interrupteur 99 est en position fermée.

L'interrupteur 96 est formé par le contact 102 et un contact 108. Etant donné que le contact 102 est commun aux interrupteurs 96 et 97, ces deux interrupteurs 96 et 97 sont toujours dans des positions opposées. Ainsi, au repos, l'interrupteur 96 est en position ouverte.

L'interrupteur 98 est formé par le contact 106 et un contact 110. Comme pour les interrupteurs 96 et 97, les interrupteurs 98 et 99 sont toujours en position opposée. Le contact 110 n'est pas utilisé dans ce mode de réalisation.

Chaque interrupteur est capable de couper un courant d'au moins 12 A sous une tension de 230 V.

Le relais 92 comprend également un électro-aimant 110. Lorsqu'il est alimenté, cet électro-aimant déplace simultanément les interrupteurs 97 et 99 de leur position fermée vers leur position ouverte et les interrupteurs 96 et 98 de leur position ouverte vers leur position fermée. Cet électro-aimant 110 est alimenté par l'intermédiaire d'une borne 112 de commande du relais 92.

Cette borne 112 est raccordée au contact 108 par l'intermédiaire d'un abaisseur de tension. Ici cet abaisseur de tension est formé par deux résistances R1 et R2 raccordées en série entre le contact 108 et la borne 112. Cet abaisseur de tension divise par au moins 1,5 et, de préférence, par deux la tension d'alimentation présente entre les bornes 80 et 82 et applique uniquement cette tension divisée sur la borne 112. Cela permet donc de protéger le relais contre une surtension importante.

Une branche est raccordée en parallèle des résistances R1 et R2. Cette branche comprend, raccordées en série, une résistance R3, une résistance R4 et une diode D1. Ainsi, lorsque l'interrupteur 96 est dans sa position fermée, la diode D1 est alimentée pour indiquer l'état déclenché du dispositif 42.

La borne 112 est également raccordée à une borne 114 d'une électronique 116 de commande du dispositif 42.

L'électronique 116 de commande du relais 92 comprend un comparateur 118 dont une sortie est directement raccordée à la borne 114.

Le comparateur 118 comprend également deux entrées 120 et 122. L'entrée 122 est raccordée à une tension de référence V_{ref}. Cette tension V_{ref} est imposée par des résistances R9, R10 et un potentiomètre Pot1. Les résistances R9 et R10 sont raccordées en série entre l'entrée 122 et une sortie 124 d'un redresseur PT1. Le potentiomètre Pot1 est raccordé en parallèle aux bornes de la résistance R10. L'entrée 122 est également raccordée à la sortie 124 par une branche disposée en parallèle des résistances R9, R10 et du potentiomètre Pot1. Cette branche comprend en série un bouton poussoir S1 et une résistance R11. Le bouton S1 est déplaçable entre une position enfoncée dans laquelle il raccorde la résistance R11 en parallèle des résistances R9 et R10 et une position escamotée dans laquelle la résistance R11 n'est pas raccordée en parallèle des résistances R9 et R10. Dans la position enfoncée, la tension de référence V_{ref} est imposée par les résistances R9, R10, R11 et par le potentiomètre Pot1. La valeur de la résistance R11 est choisie telle que lorsque le bouton S1 est enfoncé, la valeur de la tension V_{ref} est inférieure à la tension nominale du réseau 8. Ainsi, l'enfoncement du bouton S1 fait systématiquement basculer le dispositif 42 dans l'état déclenché. Le bouton S1 est destiné à être enfoncé par un opérateur afin de tester le fonctionnement du dispositif 42.

L'entrée 120 est raccordée à une sortie 126 du redresseur PT1 par l'intermédiaire d'un filtre 128. Le filtre 128 élimine les surtensions d'une durée inférieure à 0,1 s et d'une amplitude inférieure à 400 Vac efficace. Par exemple, le filtre 128 est formé d'une résistance R6 raccordée en série entre la sortie 126 et l'entrée 120 et d'un condensateur C2 raccordé directement entre les sorties 124 et 126. Ce filtre 128 permet d'empêcher un déclenchement intempestif du dispositif 42 en présence d'une tension trop élevée pendant un très court instant.

Le redresseur PT1 redresse la tension alternative du réseau 8. Par exemple, il s'agit d'un pont de diodes.

Une entrée 130 de ce redresseur PT1 est directement raccordée au contact 104 du relais 92. Une autre entrée 132 de ce redresseur est raccordée à la borne 80 par l'intermédiaire d'un condensateur C1. Une résistance R12 est également raccordée entre les deux entrées 130 et 132.

Enfin, une série de trois résistances R5, R7 et R8 est raccordée entre l'entrée 132 à la borne 80 en parallèle du condensateur C1.

Le fonctionnement du système 2 et plus précisément du dispositif 42 va maintenant être décrit en référence à la figure 3.

Initialement, lors d'une étape 140, le dispositif 42 est dans l'état armé. Dans cette étape, le redresseur PT1 redresse la tension d'alimentation du réseau 8. La tension redressée est filtrée par le filtre 128 pour éliminer des pics de tension très courts connus sous le terme anglais de « flicker ». La tension ainsi filtrée est reçue sur l'entrée 120. Elle est alors comparée à la tension V_{ref}. Si aucune surtension d'une durée supérieure à 0,1 s n'est présente sur le réseau 8, alors le dispositif 42 reste dans l'état armé. Dans cet état, les interrupteurs 96 à 99 sont dans leur position de repos. Dans cette position de repos, les bornes 80 et 82 sont directement raccordées aux bornes 84 et 86 par l'intermédiaire, respectivement, des interrupteurs 97 et 99. Ainsi, dans cet état armé, la lampe et le ballast sont électriquement raccordés au réseau 8 et alimentés. De plus, dans cet état armé, l'interrupteur 96 est en position ouverte de sorte que l'électro-aimant 110 n'est pas alimenté.

Dans le cas contraire, c'est-à-dire si la tension reçue sur l'entrée 120 dépasse la tension V_{ref}, alors on procède à une étape 142 de basculement vers l'état déclenché. Lors de cette étape 142, le comparateur 118 alimente l'électro-aimant 110 par l'intermédiaire de la borne 114. En réponse, l'électro-aimant 110 fait basculer les différents interrupteurs 96 à 99. Plus précisément, les interrupteurs 97 et 99 basculent de leur position fermée vers leur position ouverte tandis que l'interrupteur 96 bascule de sa position ouverte vers sa position fermée. L'ouverture des interrupteurs 97 et 99 isole électriquement les bornes 84 et 86 des bornes 80 et 82. Dans ces conditions, la lampe 26 et le ballast 44 ne sont plus alimentés et sont isolés électriquement, par une isolation galvanique, du réseau 8. Le déplacement de l'interrupteur 99 vers sa position ouverte isole également électriquement l'électronique de commande 116 du réseau 8. En effet, l'entrée 130 du redresseur PT1 n'est alors plus raccordée à la borne 82 de sorte que l'électronique 116 n'est plus alimentée. L'électronique 116 est dès lors protégée contre la surtension.

Le déplacement de l'interrupteur 96 vers sa position fermée alimente l'électro-aimant 110 directement à partir de la tension du réseau 8 sans passer par l'intermédiaire de l'électronique de commande 116.

On procède alors à une étape 144 lors de laquelle le dispositif 42 est maintenu dans son état déclenché tant que l'alimentation du réseau 8 n'a pas été coupée. Lors de cette étape, le dispositif 42 est automatiquement maintenu dans son état déclenché par le fait que l'électroaimant 110 est directement alimenté par le réseau 8 par l'intermédiaire de l'interrupteur 96.

Lors d'une étape 146, l'alimentation du réseau 8 est coupée. L'électro-aimant 110 n'est alors plus alimenté. Les interrupteurs 97 et 99 retournent alors dans leur position fermée tandis que l'interrupteur 96 retourne dans sa position ouverte. On retourne donc à l'état armé du dispositif 42.

Le fait de réarmer automatiquement le dispositif 42 en réponse à une coupure de l'alimentation sur le réseau 8 évite de déplacer un technicien pour effectuer ce travail. Ceci représente le réarmement automatique. Typiquement, le dispositif 42 est automatiquement réarmé le lendemain matin lorsque l'horloge 16 commande la coupure de l'éclairage public.

De nombreux autres modes de réalisation sont possibles. Par exemple, le dispositif 42 peut se présenter sous la forme d'un boîtier indépendant des autres boîtiers électriques présents dans le coffret 34. A l'inverse, le dispositif 42 peut être intégré dans le boîtier d'un des autres dispositifs électriques reçus à l'intérieur du coffret 34. Par exemple, le dispositif 42 peut être intégré dans le boîtier d'un disjoncteur ou d'un disjoncteur différentiel ou dans le boîtier du ballast 44. Le dispositif 42 peut également être intégré à l'unité 56 de réarmement automatique. Dans le cas où le dispositif 42 est intégré dans un boîtier d'un dispositif électronique comportant déjà au moins un interrupteur capable d'isoler électriquement la lampe du réseau 8 alors, avantageusement, cet interrupteur est commun au dispositif 42 et à ce boîtier. Par exemple si le boîtier est un disjoncteur, l'interrupteur utilisé par le disjoncteur pour isoler la lampe 26 du réseau 8 est le même que celui utilisé par le dispositif 42 pour isoler la lampe 26 du réseau 8. Autrement dit, le dispositif 42 peut déclencher ce disjoncteur en réponse à une surtension.

L'électronique de commande peut être réalisée de nombreuses façons différentes. Par exemple, le comparateur 108 peut être réalisé à partir d'amplificateurs opérationnels ou à partir d'autres composants électroniques permettant de réaliser une comparaison entre des tensions ou entre des courants.

De nombreux autres modes de réalisation sont également possibles pour les interrupteurs 96 à 99. Par exemple, en variante, l'interrupteur 97 ou 99 est en position ouverte au repos. Dans ce cas, l'électronique 116 de commande est modifiée pour alimenter en permanence la borne de commande 112 de manière à maintenir cet interrupteur en position fermée tant qu'aucune surtension n'est détectée sur le réseau 8. En réponse à la détection d'une surtension, l'alimentation de cette borne 112 est interrompue. L'alimentation de cette borne 112 est par exemple maintenue interrompue tant que l'alimentation du réseau électrique n'a pas été coupée.

Des relais électromécaniques commutant des tensions monophasées, biphasées ou triphasées distincts peuvent également être utilisés pour réaliser, respectivement, les interrupteurs 96 à 99. Typiquement, un même relais électromécanique bi-stable est, par exemple, utilisé pour réaliser les interrupteurs 96 et 97. Le relais 92 peut également être remplacé par plusieurs relais électromécaniques monostables, chaque relais correspondant alors à un interrupteur respectif 96, 97 et 99.

Le ou les relais électromécaniques peuvent également être remplacés par des relais statiques tels que des relais réalisés à partir de composants électroniques de puissance tels que des transistors IGBT (Insulated Gate Bipolar Transistor).

Le réarmement du dispositif 42 peut être déclenché par d'autres évènements que la coupure de l'alimentation du réseau 8. Par exemple, le dispositif 42 peut être réarmé automatiquement après qu'une durée prédéterminée δT se soit écoulée depuis la détection de la surtension. Par exemple, une minuterie est raccordée au réseau d'alimentation par l'intermédiaire de l'interrupteur 96. Ainsi, cette minuterie se déclenche en réponse à la fermeture de cet interrupteur 96. Après avoir décompté la durée δT, cette minuterie commande l'ouverture de cet interrupteur 96, ce qui réarme le dispositif 42 automatiquement.

Le coffret de raccordement peut être disposé à d'autres endroits. Toutefois, celui-ci est généralement situé à moins de 10 m de la lampe. Chaque appareil d'éclairage public a son propre coffret de raccordement.

Le candélabre n'a pas nécessairement un mât. Il peut être directement fixé sur la façade d'un bâtiment.

Le ballast peut être logé à d'autres endroits et notamment à l'intérieur de la gamelle.

Le dispositif de protection contre les surtensions peut aussi être raccordé entre le ballast et la lampe et non pas en aval du ballast comme précédemment décrit.

Ce qui a été décrit ci-dessus dans le cas particulier d'un candélabre est applicable à tout appareil d'éclairage public nécessitant une protection contre les surtensions tel que ceux définis dans l'introduction de cette demande de brevet.

L'utilisation de l'interrupteur 99 peut être mise en oeuvre indépendamment de l'utilisation de l'interrupteur 96 et vice-versa. Par exemple, l'interrupteur 99 est omis et par contre l'interrupteur 96 est utilisé. L'inverse est également possible, c'est-à-dire que le dispositif de protection contre les surtensions est adapté pour que l'interrupteur 96 soit omis et que l'interrupteur 99 soit mis en oeuvre.

## Revendications

1. Appareil d'éclairage public alimenté par un réseau électrique alternatif commun à plusieurs appareils d'éclairage public, cet appareil d'éclairage public comportant :
- au moins une lampe (26) pour éclairer un élément d'un espace public,
- un dispositif (42) de protection contre les surtensions conforme à la revendication 4, ce dispositif comprenant :
- un premier interrupteur (97) commandable déplaçable entre :
• une position ouverte dans laquelle il isole électriquement la lampe du réseau électrique, et
• une position fermée dans laquelle il raccorde électriquement la lampe au réseau électrique, et
- une électronique (116) de commande apte :
• à comparer la tension d'alimentation présente sur le réseau électrique à au moins un seuil prédéterminé, et
• à commander automatiquement le déplacement de l'interrupteur (97) de sa position fermée vers sa position ouverte en réponse au franchissement par cette tension d'alimentation du seuil prédéterminé,
**caractérisé en ce que** le dispositif de protection comporte un deuxième interrupteur (99) déplaçable, en réponse au déplacement du premier interrupteur de sa position fermée vers sa position ouverte :
- d'une position fermée dans laquelle le deuxième interrupteur (99) raccorde électriquement l'électronique (116) de commande au réseau électrique pour l'alimenter,
- vers une position ouverte dans laquelle le deuxième interrupteur (99) isole électriquement l'électronique de commande du réseau électrique.

2. Appareil selon la revendication 1, dans lequel l'appareil est un candélabre.

3. Appareil selon l'une quelconque des revendications précédentes, dans lequel l'appareil comprend un ballast (44) apte à générer la tension d'amorçage nécessaire à l'allumage de la lampe (26) et l'interrupteur commandable (97) du dispositif (42) de protection contre les surtensions est apte à isoler électriquement la lampe (26) et le ballast (44) du réseau électrique (8) dans sa position ouverte.

4. Dispositif de protection contre les surtensions pour un appareil d'éclairage public conforme à la revendication 1, ce dispositif comportant :
- un premier interrupteur (97) commandable déplaçable entre :
• une position ouverte dans laquelle il isole électriquement la lampe du réseau électrique, et
• une position fermée dans laquelle il raccorde électriquement la lampe au réseau électrique, et
- une électronique (116) de commande apte :
• à comparer la tension d'alimentation présente sur le réseau électrique à au moins un seuil prédéterminé, et
• à commander automatiquement le déplacement de l'interrupteur (97) de sa position fermée vers sa position ouverte en réponse au franchissement par cette tension d'alimentation du seuil prédéterminé,
**caractérisé en ce que** le dispositif de protection comporte un deuxième interrupteur (99) déplaçable, en réponse au déplacement du premier interrupteur de sa position fermée vers sa position ouverte :
- d'une position fermée dans laquelle le deuxième interrupteur (99) raccorde électriquement l'électronique (116) de commande au réseau électrique pour l'alimenter,
- vers une position ouverte dans laquelle le deuxième interrupteur (99) isole électriquement l'électronique de commande du réseau électrique.

5. Dispositif selon la revendication 4, dans lequel le dispositif de protection contre les surtensions comporte :
- une borne (112) de commande qui, lorsqu'elle est alimentée, maintien le premier interrupteur (97) dans sa position ouverte et qui, lorsqu'elle n'est pas alimentée, maintien le premier interrupteur dans sa position fermée,
- un troisième interrupteur (96) commandable déplaçable, en réponse au déplacement du premier interrupteur (97) de sa position fermée vers sa position ouverte :
• d'une position ouverte dans laquelle la borne de commande peut uniquement être alimentée par l'intermédiaire de l'électronique de commande,
• vers une position fermée dans laquelle le troisième interrupteur (96) raccorde directement la borne (112) de commande au réseau électrique, sans passer par l'intermédiaire de l'électronique de commande, pour maintenir le premier interrupteur (97) en position ouverte tant que le réseau électrique est alimenté.

6. Dispositif selon la revendication 5, dans lequel le dispositif comporte un abaisseur (R1, R2) de tension apte à diviser la tension du réseau électrique par au moins 1,5, cet abaisseur de tension étant raccordé entre le réseau électrique et la borne (112) de commande lorsque la borne de commande est directement raccordée au réseau électrique, pour appliquer sur cette borne de commande uniquement la tension divisée.

7. Dispositif selon l'une quelconque des revendications 4 à 6, dans lequel le premier interrupteur (97) est un interrupteur normalement en position fermée en absence de toute alimentation sur le réseau électrique.

8. Dispositif selon les revendications 4 à 7, dans lequel le dispositif de protection contre les surtensions comporte un relais électromécanique (92) équipé :
- d'au moins une première, une deuxième et une troisième paires de contacts électriques, les deux contacts d'une même paire étant déplaçables entre la position fermée où ils se touchent pour laisser passer le courant et la position ouverte où ils sont écartés mécaniquement l'un de l'autre pour empêcher le courant de passer, les première, deuxième et troisième paires de contacts formant respectivement les premier (97), deuxième (99) et troisième (96) interrupteurs, et
- de la borne (112) de commande, cette borne de commande étant commune pour commander simultanément le déplacement de ces trois paires de contact entre leurs positions ouverte et fermée.

9. Procédé de fonctionnement d'un appareil d'éclairage public équipé d'un dispositif de protection contre les surtensions conforme à l'une quelconque des revendications 4 à 8, **caractérisé en ce que** le procédé comporte :
- la comparaison (140) de la tension d'alimentation présente sur le réseau électrique à au moins un seuil prédéterminé, et
- la commande (142) automatique du déplacement du premier interrupteur de sa position fermée vers sa position ouverte en réponse au franchissement par cette tension d'alimentation du seuil prédéterminé.
